# EUROPÄISCHE PATENTANMELDUNG

(11) **EP 1 113 031 A2**
(43) Veröffentlichungstag der Anmeldung: **04.07.2001**
(21) Anmeldenummer: 00811197.3
(22) Anmeldetag: 15.12.2000
(51) Int. Cl.: C08G 18/08, C09J 175/04

(54) **Klebebindung**

(30) Priorität: 21.12.1999 CH 233399
(71) Anmelder: ALFA KLEBSTOFFE AG, 8454 Buchberg (CH)
(72) Erfinder: Simmler, Emil, 8454 Buchberg (CH); Simmler, Thomas, 8454 Buchberg (CH)
(74) Vertreter: Patentanwälte Breiter + Wiedmer AG

(57) **Zusammenfassung**

In einem Verfahren zur industriellen, gewerblichen oder handwerklichen Klebebindung von zusammengetragenen Bögen (12), insbesondere von Papierbögen, erfolgt vorerst das Aufrauhen und Egalisieren eines Rückens (14). Dieser wird mittels Walzen- oder Düsenauftrags einer wässrigen Dispersion (18) eines anionischen, modifizierten Polyurethanelastomeren über wenigstens eine Station beleimt. Dann erfolgt das Einhängen und Anpressen eines Umschlags (20) über wenigstens eine Station und das Schneiden des gebundenen Stapels (10) auf Buchmass. Das Beleimen des Buchrückens (14) wird ohne Wärmebehandlung durchgeführt. Das Einhängen und Anpressen des Umschlags (20) und das Schneiden des Buchstapels (10) erfolgen in ein- und demselben Arbeitsgang.

## Beschreibung

Die Erfindung bezieht sich auf ein Verfahren zur Klebebindung von zusammengetragenen Bögen, insbesondere von Papierbögen, durch Aufrauhen und Egalisierung eines Rückens, dessen Beleimung mittels Walzen- oder Düsenauftrags einer wässrigen Dispersion eines anionischen, modifizierten Polyurethanelastomeren über wenigstens eine Station, Einhängen und Anpressen eines Umschlags über wenigstens eine Station und Schneiden des gebundenen Stapels auf Buchmass.

Aus der WO 94/05738 ist die Verwendung von wässrigen Dispersionen aus einem polymeren, filmbildenden thermoplastischen Kunststoff und einem Polyurethan zu Buchbinderzwecken bekannt, eingeschlossen eine allfällige Zugabe von Latex zur Dispersion. Die Dispersion wird nach dem sorgfältigen Auftragen abgetrocknet. Die Verdampfung der flüchtigen Komponenten kann mit Heizvorrichtungen, Heizlampen, Gebläsen und dgl. beschleunigt werden, im Normalfall genügt jedoch die normale Abtrocknungsgeschwindigkeit. Die wässrige Dispersion kann weiter als Primer eingesetzt werden. Die flüchtigen Komponenten der Dispersion sind vor der Weiterbearbeitung des gebundenen Papierstapels weitgehend verdunstet. Aus der WO 94/05738 ist kein Bezug zum Verkleben von zwei Substratflächen mit hoher Initialhaftung erkennbar oder ableitbar, nach dem Auftragen der Dispersion erfolgt ein Verkleben mit einer trockenen, geschmolzenen Klebstoffschicht, auch Heissiegeln genannt.

In der WO 98/5559 wird ein Verfahren zum elastischen Verkleben von Substratflächen mit einem Dispersionskleber beschrieben, welcher aus einer ersten Komponente auf der Basis eines Polyurthanelastomeren und aus einer zweiten Komponente auf der Basis eines Acrylestercopolymeren besteht. Wahlweise besteht der Dispersionskleber aus einem Polyurethanelastomeren und einem Copolymeren aus Vinylacetat und Ethylen. Der Dispersionskleber wird als dünne Schicht auf wenigstens eine der zu verklebenden Substratflächen aufgetragen und mit einem kurzem Wärmestoss teilweise entwässert. Schliesslich werden die zu verklebenden Substratflächen nass aufeinandergelegt. Es wird auch erwähnt, dass das Verfahren vorteilhaft in der Buchbindetechnik angewandt werden kann, wobei die erfindungsgemässe Bedeutung eines kurzen Wärmestosses von 1 bis 2 sec Dauer herausgestrichen wird.

Der vorliegenden Erfindung liegt die Aufgabe zugrunde, ein Verfahren der eingangs genannten Art zu schaffen, welche die Buchbindetechnik weiter vereinfacht und verbilligt, insbesondere durch einen erhöhten Arbeitstakt ohne aufwendige und teure Einrichtung zur Wärmezufuhr. Dabei sollen folgende Systeme substituiert werden:
a) Polyurethan-Hot-melt, welcher wegen des Polyisozyanat-Anteiles vermehrt unter Kritik gerät (MAK-Wert).
b) Dispersionsleim, welcher mittels einer HF-Heizung beschleunigt getrocknet wird (hohe Investitions- und hohe Energiekosten).

Die Aufgabe wird erfindungsgemäss dadurch gelöst, dass das Beleimen des Buchrückens ohne Wärmebehandlung, das Einhängen und Anpressen des Umschlags und das Schneiden des Buchstapels in **einem** Arbeitsgang erfolgt. Vorteilhafte und weiterbildende Ausführungsformen des Verfahrens sind Gegenstand von abhängigen Patentansprüchen.

Zur industriellen, gewerblichen oder handwerklichen Durchführung des Verfahrens in einem einzigen Arbeitsgang, auch in-line Verfahren genannt, erfolgt das Einhängen und Anpressen des Umschlags zweckmässig 0,1 bis 15 sec nach der Rückenbeleimung, das Schneiden 10 bis 120 sec nach dem Einhängen des Umschlags. Vorzugsweise wird das Einhängen und Anpressen des Umschlags 0,1 bis 3 sec nach der Rückenbeleimung, das Schneiden 20 bis 60 sec nach dem Einhängen des Umschlags durchgeführt.

Es werden im Gegensatz zur eingangs diskutierten WO 94/05738, stets nasse oder noch feuchte Oberflächen aufeinandergelegt.

Die mit dem erfindungsgemässen Verfahren erreichte Initialhaftkraft ist unabhängig von einer vorgängigen Ablüftung. Bei einem kürzeren Maschinenstopp entstehen keine Produktionsausfälle, die aufgetragene Dispersion bleibt verhältnismässig lange nass bzw. offen und behält ihre vorteilhaften Eigenschaften bis kurz vor dem Austrocknen im wesentlichen unverändert.

Die im erfindungsgemässen Verfahren eingesetzten Dispersionskleber sind bevorzugt drucksensibel. In der Regel erfolgt ein kurzes Andrücken des Umschlags, meist eines Umschlagpapiers, vorzugsweise während 0,1 bis 5 sec mit zweckmässig mindestens 1 N/cm², insbesondere 10 bis 50 N/cm², was die Abbindung des Klebstoffs auslöst.

Das Beleimen der Buchrücken erfolgt bevorzugt mit einem Polyester-Polyurethanelastomeren, insbesondere mit einer Mischung Acrylsäureester-Copolymer mit einer Polyester-Polyurethandispersion oder mit einem Acrylsäureester-Styrol-Polyurethancopolymeren, auch einem selbstvernetzenden, mit einer Polyurethandispersion.

Nach einer weiteren bevorzugten Ausführungsform wird der Buchrücken mit einem Ethylen-Vinylacetat-Polyurethancopolymeren beleimt.

Die Vermischung dieser Polyurethane gewährleistet bei gezieltem Einsatz im Rahmen der vorliegenden Erfindung nicht nur eine hohe Initialhaftkraft, sondern auch universelle Verwendungsmöglichkeiten für polare und nichtpolare Substrate, wobei auch unter Feuchtigkeitseinwirkung eine gute Beständigkeit erhalten bleibt.

Ein mit dem erfindungsgemässen Verfahren eingesetzter Dispersionskleber wird zweckmässig in einem Mischer üblicher Bauart hergestellt, wobei die Komponenten in vorausbestimmter Reihenfolge zugegeben werden. Eine fertig gemischte Dispersion kann unter Luftabschluss mehrere Monate aufbewahrt werden.

Ein erfindungsgemäss eingesetzter wässriger Dispersionskleber hat vorzugsweise einen Festkörperanteil von 40 - 80 Gew.-%, insbesondere 50 - 70 Gew.-%. Der Rest ist im wesentlichen Wasser, er enthält jedoch in der industriellen Praxis auch die für Dispersionskleber üblichen Zusätze. Oft sind diese dem Verwender nicht bekannt, sie werden vom Fabrikanten der Klebrohstoffe nicht spezifiziert.

Das Einmischen von Zusatzkomponenten in einen erfindungsgemäss eingesetzten Dispersionskleber richtet sich nach handelsüblichen Produkten und den gewünschten Eigenschaften der Dispersion. Die Zugabe von 1 bis 25 Gew.-% eines Dispersionspulvers, bezogen auf den Feststoffgehalt, dient der Erhöhung des Festkörpers und der Kohäsion. Der Dispersionskleber kann z.B. bis zu 15 Gew.-%, bezogen auf den Feststoffgehalt, N-Methyl-2-Pyrrolidon enthalten.

Weiter wirkt sich das Einmischen von je bis zu 15 Gew.-%, bezogen auf den Feststoffgehalt, Glycerin und/oder Talk positiv aus.

Der wässrige Dispersionskleber wird vorzugsweise mit einer spezifischen Menge von 2 bis 150 g/m², insbesondere von 15 bis 100 g/m², bezogen auf den Feststoffgehalt, aufgetragen. Der Dispersionskleber wird mit einem an sich bekannten Verfahren aufgetragen, beispielsweise durch Aufwalzen, Pinselauftrag oder elektronisch gesteuerten Düsenauftrag.

Auf einem leistungsfähigen Klebe-Bindeautomaten kann in der Buchbindetechnik eine wesentlich bessere und auch schnellere Klebebindung erzielt werden, als dies bisher mit Dispersionsklebstoffen der Fall war. Nach dem Zusammentragen der Bögen und Aufrauhen kann durch Beleimung des Buchrückens mit dem Dispersionskleber innerhalb von weit weniger als einer Sekunde nach der Rückenbeleimung, z.B. zur Herstellung von Katalogen oder Broschüren, eine Stundenleistung von etwa 10'000 Stück erreicht werden. Die bei der Buchbindetechnik besonders wichtige Flexibilität bleibt trotz hoher Kohäsions- und Adhäsionskraft gewahrt.

Die Erfindung wird anhand von in der Zeichnung dargestellten Ausführungsbeispielen, welche auch Gegenstand von abhängigen Patentansprüchen sind, näher erläutert. Es zeigen schematisch:
- - Fig. 1: einen Papierstapel beim Beschichten mit einer Dispersion,
- - Fig. 2: den Papierstapel von Fig. 1 mit eingehängtem Umschlagpapier,
- - Fig. 3: der Umschlagpapierausriss verschiedener Papiere,
- - Fig. 4: Pullwerte von Katalogpapier,
- - Fig. 5: Pullwerte von Kunstdruckpapier, und
- - Fig. 6: Pullwerte bei Offsetdruckpapier.

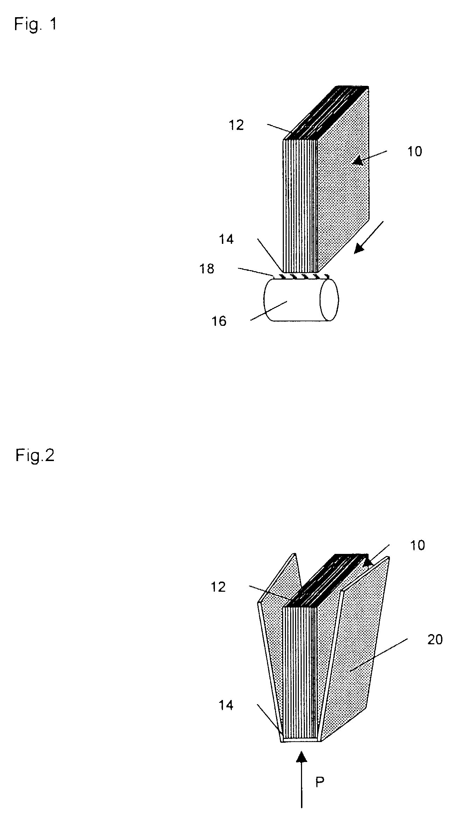

Fig. 1 zeigt einen Stapel 10 von Papierbögen 12, welche zu einer Broschüre gebunden werden sollen. Der Buchrücken 14 ist egalisiert und aufgerauht. Er wird von einer Walze 16 mit Rakel mit wässriger Dispersion 18 beschichtet, indem der Buchrücken 14 in Richtung des Pfeils über die Walze 16 gezogen wird.

Unmittelbar nach dem Auftrag der wässrigen Dispersion 18 wird gemäss Fig. 2 in der kontinuierlichen Bearbeitungslinie ein Umschlag 20 kurz auf den Buchrücken 14 gedrückt. Dies erfolgt mit einem Druck P von etwa 40 N/cm², während etwa 2 sec. Im nächsten Bearbeitungsschritt werden die beiden nicht dargestellten abstehenden Lappen des Umschlags 20 auf den obersten und auf den untersten Papierbogen 12 gedrückt. Bereits nach kurzer Zeit, z.B. 10 bis 60 sec später, kann der gebundene Stapel 10 auf das Endmass geschnitten werden. Dies alles erfolgt, wie erwähnt, auf einer automatisierten Linie.

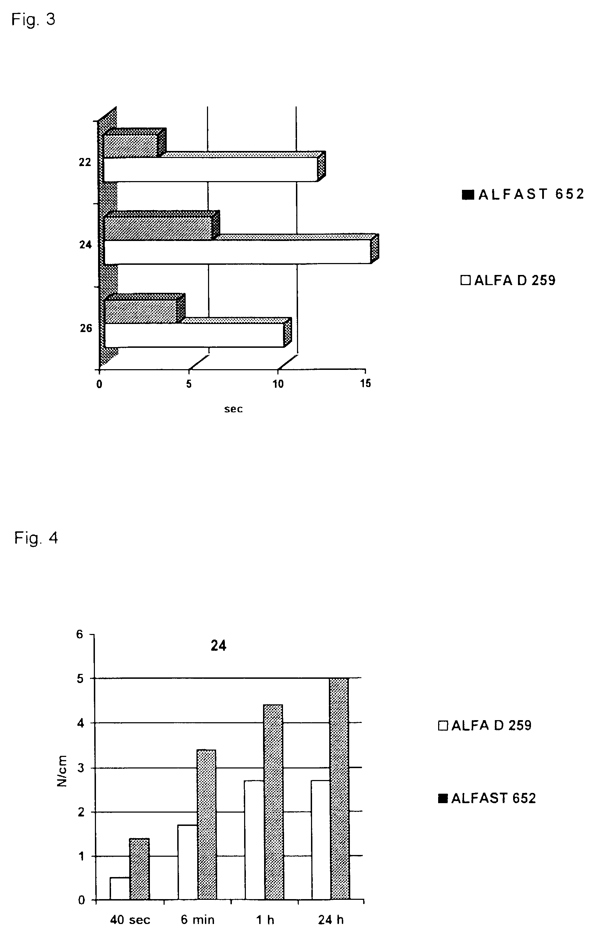

In Fig. 3 ist der Vergleich von drei verschiedenen Papierqualitäten bezüglich ihres Umschlagausrisses dargestellt, jeweils mit dem bekannten Klebstoff ALFA D 259, einem wässrigen Kunstharzleim, und einem der erfindungsgemässen Klebstoffe ALFAST 652. Die Klebstoffe ALFA VP 142 D, ALFA VP 142 E oder ALFA VP 141 Q ergeben weitgehend gleiche Werte wie ALFAST 652. Mit dem bisher verwendeten ALFA D 259 erfolgt der Papierausriss im Bereich von 10 bis 15 sec, mit ALFAST 652, ALFA VP 142D, 142 E oder 141 Q schon im Bereich von 2,5 bis 6 sec. Die Werte für den Umschlagpapierausriss für Offsetdruckpapier sind mit 22, diejenigen für Katalogpapier mit 24 und diejenigen für Kunstdruckpapier mit 26 bezeichnet.

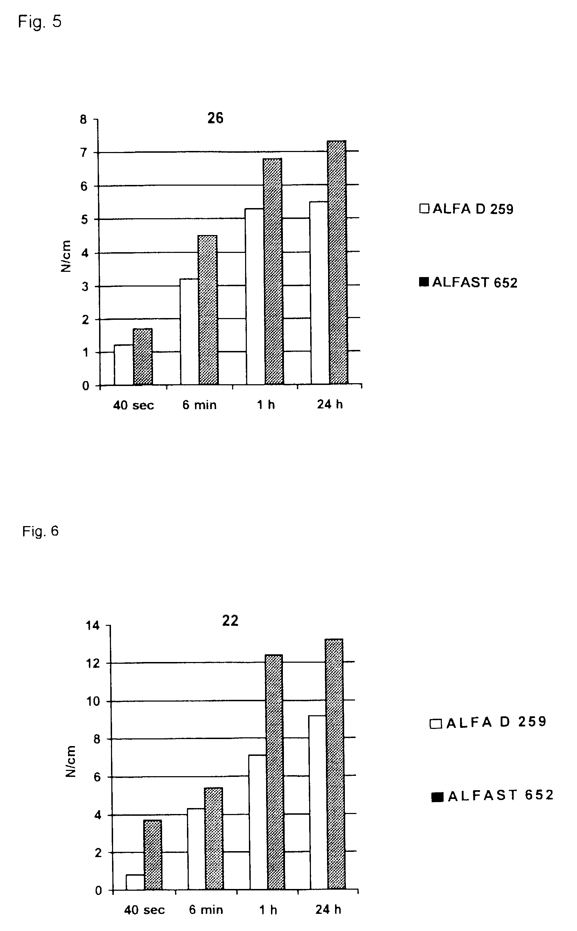

In den Fig. 4 bis 6 werden die Pullwerte von Katalogpapier 24 (Fig. 4), Kunstdruckpapier 26 (Fig. 5) und Offsetdruckpapier 22 (Fig. 6) dargestellt. Die auf der Ordinate aufgetragenen Pullwerte in N/cm zeigen die Abschälkraft von der Blattkante in Funktion der Zeit seit dem Beleimen des Buchrückens. Die auf der Abszisse aufgetragene Zeitachse ist nicht linear.

Die mit einem erfindungsgemässen Klebstoff ALFAST 652, aber auch mit ALFA VP 142 D, 142 E oder 141 Q erreichten Pullwerte sind jederzeit wesentlich grösser als die mit dem bekannten Klebstoff ALFA D 259 erreichten Werte. Nach 40 sec ist der Unterschied bei Offsetdruckpapier 22 (Fig. 6) besonders deutlich. Nur die mit dem erfindungsgemässen Klebstoff ALFAST 652 beleimten Stapel erreichen spätestens nach 40 sec einen Pullwert, der bereits das Schneiden erlaubt. Nach 6 min sind bei Fig. 4 und 5 mehr als 50% des Endwertes nach 24 h, nach einer Stunde bei allen Fig. 4 bis 6 sind 85 bis 95% des Endwertes erreicht.

Die Pullwerte in den Fig. 4 bis 6, welche für die vier vorgenannten Klebstoffe nur unmerklich voneinander abweichen, betreffen lediglich erste Versuche, durch optimalisierte Bedingungen lassen sich die Werte weiter verbessern.

## Patentansprüche

1. Verfahren zur Klebebindung von zusammengetragenen Bögen (12), insbesondere von Papierbögen, durch Aufrauhen und Egalisieren eines Rükkens (14), dessen Beleimung mittels Walzen- oder Düsenauftrags einer wässrigen Dispersion (18) eines anionischen, modifizierten Polyurethanelastomeren über wenigstens eine Station, Einhängen und Anpressen eines Umschlags (20) über wenigstens eine Station und Schneiden des gebundenen Stapels (10) auf Buchmass,
dadurch gekennzeichnet, dass
das Beleimen des Buchrückens (14) ohne Wärmebehandlung, das Einhängen und Anpressen des Umschlags (20) und das Schneiden des Buchstapels (10) in **einem** Arbeitsgang erfolgt.

2. Verfahren nach Anspruch 1, dadurch gekennzeichnet, dass das Einhängen und Anpressen des Umschlags (20) 0,1 bis 15 sec, vorzugsweise 0,1 bis 3 sec, nach der Rückenbeleimung erfolgt.

3. Verfahren nach Anspruch 1 oder 2, dadurch gekennzeichnet, dass das Schneiden 10 bis 120 sec, vorzugsweise 20 bis 60 sec, nach dem Einhängen des Umschlags erfolgt.

4. Verfahren nach einem der Ansprüche 1 bis 3, dadurch gekennzeichnet, dass der Buchrücken (14) mit einem Polyester-Polyurethanelastomeren beleimt wird.

5. Verfahren nach einem der Ansprüche 1 bis 3, dadurch gekennzeichnet, dass der Buchrücken (14) mit einem Acrylester-Polyurethancopolymeren, auch mit einem selbstvernetzenden, beleimt wird.

6. Verfahren nach einem der Ansprüche 1 bis 3, dadurch gekennzeichnet, dass der Buchrücken (14) mit einem Acrylsäureester-Polyurethancopolymeren oder mit einem Acrylsäureester-Styrol-Polyurethancopolymeren beleimt wird.

7. Verfahren nach einem der Ansprüche 1 bis 3, dadurch gekennzeichnet, dass der Buchrücken (14) mit einem Ethylen-Vinylacetat-Polyurethancopolymeren beleimt wird.

8. Verfahren nach einem der Ansprüche 1 bis 7, dadurch gekennzeichnet, dass der Buchrücken (14) mit einem Polyurethanelastomeren, das zusätzlich je bis zu 15 Gew.-%, bezogen auf den Feststoffgehalt, N-Methyl-2-Pyrrolidon, Glycerin und/oder Talk enthält, beleimt wird.

9. Verfahren nach einem der Ansprüche 1 bis 8, dadurch gekennzeichnet, dass das Anpressen des Umschlags (20) während 0,1 bis 5 sec erfolgt, vorzugsweise mit wenigstens 1 N/cm², insbesondere mit 10 bis 50 N/cm².

10. Verfahren nach einem der Ansprüche 1 bis 9, dadurch gekennzeichnet, dass der wässrige Dispersionskleber (18) mit einer spezifischen Menge von 2 bis 150 g/m² aufgetragen wird.
